# EUROPÄISCHE PATENTSCHRIFT

(11) **EP 2 853 784 B1**
(45) Veröffentlichungstag und Bekanntmachung des Hinweises auf die Patenterteilung: **28.06.2017**
(21) Anmeldenummer: 14185094.1
(22) Anmeldetag: 17.09.2014
(51) Int. Cl.: F16J 15/3288, F16J 15/3268, F01D 11/00

(54) **Bürstendichtung für eine Turbomaschine**
Brush sealing for a turbo engine
Joint à brosse pour une turbomachine

(30) Priorität: 30.09.2013 DE 102013219832
(43) Veröffentlichungstag der Anmeldung: 01.04.2015
(73) Patentinhaber: MTU Aero Engines AG, 80995 München (DE)
(72) Erfinder: Stiehler, Frank, 04924 Bad Liebenwerda (DE)

(56) Entgegenhaltungen:
- EP-A1- 2 626 601
- GB-A- 2 188 121
- US-A1- 2005 151 324

## Beschreibung

Die vorliegende Erfindung betrifft eine Bürstendichtung für eine Turbomaschine, eine Turbomaschine, insbesondere Gasturbine, mit einer solchen Bürstendichtung sowie ein Verfahren zur Montage einer solchen Bürstendichtung.

Aus der DE 296 00 193 Ul ist eine Bürstendichtung zur Abdichtung eines Spaltes zwischen einer Rotor-Stator-Anordnung mittels Borsten bekannt, die durch einen Klemmring gefasst sind. Der Klemmring oder ein dieses aufnehmendes Dichtungsgehäuse sind zwischen einer Schulter einer Aussparung eines Statorgehäuses und einer separaten Wand verklemmt, die mit dem Statorgehäuse verschweißt ist.

Eine Bürstendichtung gemäß dem Oberbegriff von Anspruch 1 ist aus der GB 2 188 121 A bekannt. Der Vollständigkeit halber sei zudem auch noch auf die Druckschriften EP 2 626 601 A1 und US 2005/151324 A1 verwiesen, die ähnliche Dichtungen offenbaren.

Eine Aufgabe einer Ausführung der vorliegenden Erfindung ist es, eine verbesserte Bürstendichtung für eine Turbomaschine zur Verfügung zu stellen, insbesondere deren Montage und/oder Demontage zu verbessern.

Diese Aufgabe wird durch eine Bürstendichtung mit den Merkmalen des Anspruchs 1 gelöst. Ansprüche 9 und 11 stellen eine Turbomaschine mit einer entsprechenden Bürstendichtung bzw. ein Verfahren zur Montage einer entsprechenden Bürstendichtung unter Schutz. Vorteilhafte Ausführungsformen der Erfindung sind Gegenstand der Unteransprüche.

Nach einem Aspekt der vorliegenden Erfindung weist eine Turbomaschine eine Bürstendichtung mit einem Träger auf.

Die Turbomaschine kann insbesondere eine Gasturbine, vorzugsweise eine Flugtriebwerksgasturbine, sein. Sie weist in einer Ausführung einen Rotor und ein Gehäuse auf. Die Bürstendichtung kann insbesondere in einer Verdichter- oder Turbinenstufe der Gasturbine angeordnet sein.

Der Träger ist in einer Ausführung ein gehäusefester Träger. Er kann insbesondere Teil des Gehäuses selber sein. Gleichermaßen kann er in einer Ausführung ein Innendeckband eines gehäusefesten Leitgitters oder mit einem solchen, insbesondere dauerhaft oder lösbar, verbunden sein.

Der Träger einer erfindungsgemäßen Bürstendichtung weist eine, vorzugsweise ringartige und/oder axial ein- oder beidseitig offene, Aussparung auf, in der ein Federelement axial verspannt ist, welches seinerseits ein Bürstenelement festlegt, das in einer Ausführung den Rotor, insbesondere dichtend, kontaktiert. Die Bürstendichtung kann somit insbesondere eine radial innere Luftdichtung ("Inner Air Seal") einer Verdichter- oder Turbinenstufe einer Gasturbine bilden.

Das Bürstenelement weist in einer Ausführung mehrere Borsten, insbesondere aus Metall und/oder Kunststoff, auf. Diese können in einer Ausführung einen Kern umschlingen oder auch an rotorabgewandten Seiten zusammengefasst, insbesondere stoffschlüssig verbunden oder reibschlüssig geklemmt sein.

Nach einem Aspekt der vorliegenden Erfindung ist das Federelement an einer Hinterschneidung in der Aussparung axial verrastet. Hierunter wird vorliegend insbesondere in fachüblicher Weise verstanden, dass das Federelement im verrasteten Zustand einen größeren Außendurchmesser als eine radial innere Kante der Hinterschneidung aufweist und sich mit diesem axial an der Hinterschneidung abstützt und so das in axialer Richtung elastisch komprimierte Federelement verspannt. Eine axiale Richtung im Sinne der vorliegenden Erfindung kann insbesondere mit einer Längs-, insbesondere Symmetrie- bzw. Rotationsachse der Bürstendichtung bzw. Turbomaschine fluchten, eine radiale Richtung entsprechend senkrecht hierzu orientiert sein.

Indem das Federelement an der Hinterscheidung in axialer Richtung verrastet ist und sich an dieser axial abstützt, kann in einer Ausführung die Struktur, die Montage und/oder Demontage der Bürstendichtung vereinfacht und/oder ihre Funktion verbessert werden. Insbesondere kann in einer Ausführung das Federelement, vorzugsweise elastisch in radialer Richtung komprimiert, in die Aussparung eingeführt und in dieser, insbesondere selbsttätig unter vollständiger oder teilweiser elastischer Entspannung in radialer Richtung, hinter der Hinterschneidung expandiert und dort gegen die Hinterschneidung axial verspannt und so axial an ihr verrastet werden. Somit kann in einer vorteilhaften Ausführung eine separate, stoffschlüssig mit dem Träger zu verbindende Wand entfallen.

In einer Ausführung weist die Aussparung eine Einführöffnung zum Einführen, insbesondere in axialer Richtung, des hierzu in radialer Richtung elastisch komprimierten Federelements auf, welches anschließend gegenüber einer Einführkonfiguration radial expandiert und so mit der Hinterschneidung verrastet und sich an dieser abstützt. Entsprechend ist ein Umfang der Einführöffnung in einer Ausführung kleiner als ein (maximaler) Außenumfang des in der Aussparung verspannten Federelements, insbesondere kleiner als ein Außenumfang des Federelements, mit dem dieses an der Hinterschneidung verrastet ist.

Die Hinterschneidung kann in einer Ausführung durch eine axiale Stirnseite eines Radialbunds der Aussparung gebildet sein, der vorzugsweise einstückig mit dem Träger ausgebildet ist und/oder die Einführöffhung definiert. Insbesondere kann die Aussparung eine Radialnut aufweisen, deren axiale Erstreckung in einer Weiterbildung höchstens die Hälfte der axialen Erstreckung der Aussparung und/oder des Federelements beträgt, und deren eine axiale Stirnseite die Hinterschneidung bildet. Insbesondere durch eine solche, im Verhältnis zur Aussparung bzw. dem Federelement schmalen Radialnut kann eine vorteilhafte Verrastung bei geringer Materialschwächung dargestellt werden. Die Hinterschneidung kann in einer Ausführung, wenigstens im Wesentlichen, senkrecht zur axialen Richtung sein, insbesondere, um das Federelement vorteilhaft abzustützen. Eine Nuttiefe der Radialnut beträgt in einer Ausführung wenigstens das Doppelte und/oder höchstens das 20fache einer, insbesondere maximalen oder minimalen, Wandstärke des Federelements. Hierdurch kann in einer Ausführung eine vorteilhafte, auf das Federelement abgestimmte Verrastung dargestellt werden. Entsprechend steht in einer Ausführung ein Außenumfang des Federelements, mit dem dieses an der Hinterschneidung verrastet ist bzw. sich axial an der Hinterschneidung abstützt, in radialer Richtung über einen (maximalen) Außenumfang des Bürstenelements vor.

In einer Ausführung ist bzw. wird das Federelement durch seine axiale Verspannung auch in radialer Richtung reibschlüssig in der Aussparung festgelegt. Gleichermaßen kann es, insbesondere in nachfolgend erläuterter Weise, formschlüssig in der Aussparung festgelegt sein.

Erfindungsgemäß weist das Federelement einen ersten Schenkel, einen diesem benachbarten zweiten Schenkel und einen diesem benachbarten dritten Schenkel auf. In einer Weiterbildung weist das Federelement einen dem dritten Schenkel benachbarten vierten Schenkel auf. Es kann somit insbesondere Z- oder W-artig ausgebildet sein bzw. einen solchen Abschnitt aufweisen.

In einer erfindungsgemäßen Variante ist das Bürstenelement zwischen dem ersten und zweiten Schenkel, insbesondere stoff-, form- und/oder reibschlüssig, festgelegt, insbesondere geklemmt. So kann in einer Ausführung durch die axiale Verspannung des Federelements zugleich auch das Bürstenelement (stärker) festgelegt werden.

Zusätzlich kann der erste Schenkel sich axial an einer Schulter der Aussparung abstützen und so das Federelement axial verspannen. Auf diese Weise kann der erste Schenkel in einer Ausführung zugleich als axiale Abstützung des Federelements und als Festlegung des Bürstenelements fungieren.

In einer zusätzlichen oder alternativen erfindungsgemäßen Variante stützt sich der vierte Schenkel axial an der Hinterschneidung ab. Auf diese Weise kann, insbesondere durch ein W-artiges Federelement, eine vorteilhafte elastische Deformationscharakteristik dargestellt werden. Der vierte Schenkel kann in einer Weiterbildung gegenüber den anderen Schenkeln verkürzt sein, insbesondere radial oberhalb einer die Hinterscheidung begrenzenden Kante, insbesondere der Einführöffnung, enden.

In einer Ausführung kann das Federelement sich formschlüssig mit einem Übergangsbereich zwischen dem ersten und zweiten Schenkel und/oder mit einem Übergangsbereich zwischen dem dritten und vierten Schenkel radial in der Aussparung abstützen.

In einer Ausführung ist das, vorzugsweise ringförmige, Bürstenelement einteilig ausgebildet, was insbesondere die Stabilität verbessern kann. In einer anderen Ausführung ist das mehrteilige Bürstenelement aus mehreren, vorzugsweise dauerhaft oder lösbar verbundenen, Segmenten ringförmig zusammengesetzt, was insbesondere die (De)Montage erleichtern kann.

Das, vorzugsweise ringförmige, Federelement kann in einer Ausführung ebenfalls einteilig ausgebildet sein, was insbesondere die Stabilität verbessern kann. In einer anderen Ausführung ist das mehrteilige Federelement aus mehreren, vorzugsweise dauerhaft oder lösbar verbundenen, Segmenten ringförmig zusammengesetzt, was insbesondere die (De)Montage erleichtern kann.

Das Federelement weist in einer Ausführung Metall auf bzw. ist metallisch ausgebildet. In einer Ausführung ist das Federelement, vorzugsweise galvanisch, beschichtet. Hierdurch kann die Kontaktpaarung mit der Aussparung verbessert werden.

In einer Ausführung ist der Träger aus einer Titan-Aluminium-Legierung hergestellt. Ein solcher Träger ist üblicherweise druckempfindlich, so dass die erfindungsgemäße Verrastung des Federelements insbesondere gegenüber einer Verschraubung, Vernietung oder dergleichen vorteilhaft sein kann.

Zur Montage einer Bürstendichtung wird nach einem Aspekt der vorliegenden Erfindung das Federelement, insbesondere unter elastischer radialer Kompression, in die Aussparung eingeführt und verrastet dort unter teilweiser oder vollständiger elastischer Entspannung in radialer Richtung an der Hinterschneidung, an der es sich abstützt und hierdurch axial elastisch verspannt ist, um das Federelement in der Aussparung festzulegen.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

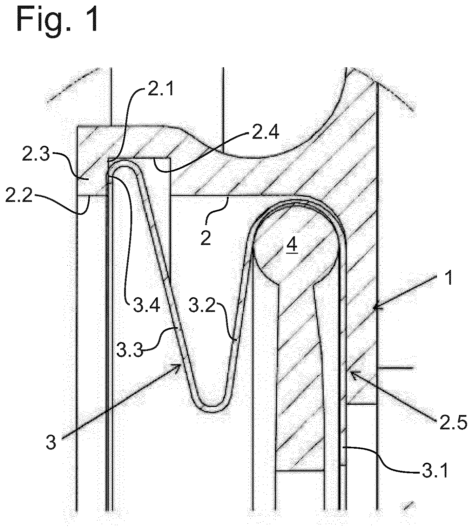

- Fig. 1: einen Teil einer Bürstendichtung einer Gasturbine nach einer Ausführung der vorliegenden Erfindung in einem Meridianschnitt.

Fig. 1 zeigt einen Teil einer Bürstendichtung einer Gasturbine mit einem Rotor und einem Gehäuse (nicht dargestellt) nach einer Ausführung der vorliegenden Erfindung in einem Meridianschnitt.

Die Bürstendichtung weist einen gehäusefesten Träger 1 mit einer ringartigen, axial beidseitig offenen Aussparung 2 auf, in der ein Federelement 3 axial (horizontal in Fig. 1) verspannt ist, welches seinerseits ein Bürstenelement 4 festlegt, das den Rotor dichtend kontaktiert (nicht dargestellt).

Das Federelement ist an einer Hinterschneidung 2.1 in der Aussparung axial verrastet, indem es im in Fig. 1 dargestellten verrasteten Zustand einen größeren Außendurchmesser als eine radial innere Kante der Hinterschneidung aufweist und sich mit diesem axial an der Hinterschneidung abstützt und so das in axialer Richtung elastisch komprimierte Federelement verspannt.

Die Aussparung weist eine Einführöffnung 2.2 zum Einführen in axialer Richtung, des hierzu in radialer Richtung elastisch komprimierten Federelements auf, welches anschließend gegenüber einer Einführkonfiguration radial expandiert und so mit der Hinterschneidung verrastet und sich an dieser abstützt. Entsprechend ist ein Umfang der Einführöffnung kleiner als der Außenumfang des Federelements, mit dem dieses an der Hinterschneidung verrastet ist.

Die Hinterschneidung 2.1 ist durch eine axiale Stirnseite eines Radialbunds 2.3 der Aussparung gebildet, der einstückig mit dem Träger ausgebildet ist und die Einführöffnung definiert. Hierzu weist die Aussparung eine Radialnut 2.4 auf, deren axiale Erstreckung (von links nach rechts in Fig. 1) weniger als die Hälfte der axialen Erstreckung der Aussparung und des Federelements beträgt, und deren eine axiale Stirnseite die Hinterschneidung 2.1 bildet, die senkrecht zur axialen Richtung ist. Eine Nuttiefe der Radialnut beträgt mehr als das Doppelte und weniger als das 20fache der Wandstärke des Federelements. Entsprechend steht der Außenumfang des Federelements, mit dem dieses an der Hinterschneidung verrastet ist bzw. sich axial an der Hinterschneidung abstützt, in radialer Richtung über einen Außenumfang des Bürstenelements 4 vor.

Das Federelement 3 weist einen ersten Schenkel 3.1, einen diesem benachbarten zweiten Schenkel 3.2, einen diesem benachbarten dritten Schenkel 3.3 und einen diesem benachbarten vierten Schenkel 3.4 auf und ist somit W-artig ausgebildet.

Das Bürstenelement 4 ist zwischen dem ersten Schenkel 3.1 und dem zweiten Schenkel 3.2 geklemmt.

Der erste Schenkel 3.1 stützt sich axial an einer Schulter 2.5 der Aussparung ab und verspannt so das Federelement axial.

Der vierte Schenkel 3.4 stützt sich axial an der Hinterschneidung 2.1 ab und ist gegenüber den anderen Schenkeln 3.1-3.3 verkürzt, so dass er radial oberhalb der Einführöffnung 2.2 endet.

Das Federelement stützt sich formschlüssig mit einem Übergangsbereich zwischen dem dritten und vierten Schenkel radial in der Radialnut 2.4 der Aussparung ab.

Zur Montage der Bürstendichtung wird das Federelement unter elastischer radialer Kompression in die Aussparung eingeführt und verrastet dort unter teilweiser elastischer Entspannung in radialer Richtung an der Hinterschneidung, an der es sich abstützt und hierdurch axial elastisch verspannt ist, um das Federelement in der Aussparung festzulegen.

Insbesondere kann sich bei der Montage der Bürstendichtung unter Aufbringung einer Druckkraft der zweite Schenkel 3.2 in Richtung auf den ersten Schenkel 3.1 des Federelements 3 hin bewegen. Hierdurch neigt sich der dritte Schenkel 3.3 stärker zu der Achse der Turbomaschine hin, wodurch sich die radiale Erstreckung des Übergangsbereichs zwischen dem dritten Schenkel 3.3 und dem vierten Schenkel 3.4 verkleinert. Mit anderen Worten wandert der Übergangsbereich zwischen dem dritten Schenkel 3.3 und dem vierten Schenkel 3.4 in Figur 1 nach unten. Somit kann er in axialer Richtung durch die Einführöffnung gleiten und sich danach durch die elastische Federkraft wieder in radial Richtung ausdehnen, um in die Radialnut 2.4 einzurasten. Die abgerundete Form des Übergangsbereichs zwischen den benachbarten dritten Schenkel 3.3 und vierten Schenkel 3.4 begünstigt dabei das Einrühren der Bürstendichtung bzw. des Federelements 3 in die Aussparung 2. Die im Wesentlichen W-formige Ausbildung des Federelements 2 begünstigt zudem die zur Montage bzw. Demontage unterstützende elastische Verformbarkeit des Federelements sowohl in radialer als auch in axialer Richtung. Die Montage bzw. Demontage kann somit sehr einfach durchgeführt werden, wobei es nicht notwendig ist, die Bürstendichtung mehrteilig auszuführen. Sie kann vielmehr in Form eines geschlossenen Rings ausgeführt sein, was vorteilhaft im Hinblick auf die Stabilität und des Montageaufwandes ist. Ein Verschweißen, Verschrauben, Vernieten oder dergleichen ist für die Montage des Bürstenelements nicht notwendig. Gleichwohl wird ein sicherer Halt der Bürstendichtung im Träger 1 gewährleistet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: Träger
- 2: Aussparung
- 2.1: Hinterschneidung
- 2.2: Einführöffnung
- 2.3: Radialbund
- 2.4: Radialnut
- 2.5: Schulter
- 3: Federelement
- 3.1: erster Schenkel
- 3.2: zweiter Schenkel
- 3.3: dritter Schenkel
- 3.4: vierter Schenkel
- 4: Bürstenelement

## Patentansprüche

1. Bürstendichtung für eine Turbomaschine, mit einem Träger (1), der eine Aussparung (2) aufweist, in der ein Federelement (3) axial verspannt ist, welches ein Bürstenelement (4) festlegt,
wobei das Federelement an einer Hinterschneidung (2.1) in der Aussparung axial verrastet ist,
**dadurch gekennzeichnet, dass** das Federelement einen ersten Schenkel (3.1), einen diesem benachbarten zweiten Schenkel (3.2) und einen diesem benachbarten dritten Schenkel (3.3) aufweist, wobei das Bürstenelement zwischen dem ersten und zweiten Schenkel festlegt, insbesondere geklemmt ist, und/oder das Federelement einen dem dritten Schenkel benachbarten vierten Schenkel (3.4) aufweist, der sich an der Hinterschneidung abstützt.

2. Bürstendichtung nach dem vorhergehenden Anspruch, **dadurch gekennzeichnet, dass** das Federelement radial reib- und/oder formschlüssig in der Aussparung festgelegt ist.

3. Bürstendichtung nach einem der vorhergehenden Ansprüche, **dadurch gekennzeichnet, dass** die Aussparung eine Einführöffnung (2.2) zum Einführen des anschließend radial expandierten Federelements aufweist.

4. Bürstendichtung nach dem vorhergehenden Anspruch, **dadurch gekennzeichnet, dass** der erste Schenkel sich axial an einer Schulter (2.5) der Aussparung abstützt.

5. Bürstendichtung nach einem der beiden vorhergehenden Ansprüche, **dadurch gekennzeichnet, dass** das Federelement sich radial mit einem Übergangsbereich zwischen dem ersten und zweiten Schenkel und/oder mit einem Übergangsbereich zwischen dem dritten und vierten Schenkel in der Aussparung abstützt.

6. Bürstendichtung nach einem der vorhergehenden Ansprüche, **dadurch gekennzeichnet, dass** das ringförmige Bürsten- und/oder Federelement ein- oder mehrteilig ausgebildet ist.

7. Bürstendichtung nach einem der vorhergehenden Ansprüche, **dadurch gekennzeichnet, dass** das, insbesondere metallische, Federelement, insbesondere galvanisch, beschichtet ist.

8. Bürstendichtung nach einem der vorhergehenden Ansprüche, **dadurch gekennzeichnet, dass** der Träger aus einer Titan-Aluminium-Legierung hergestellt ist.

9. Turbomaschine mit einem Rotor, einem Gehäuse und einer Bürstendichtung nach einem der vorhergehenden Ansprüche mit einem gehäusefesten Träger, der die Aussparung aufweist, wobei das Bürstenelement den Rotor kontaktiert.

10. Turbomaschine nach Anspruch 9, wobei die Turbomaschine eine Gasturbine ist.

11. Verfahren zur Montage einer Bürstendichtung nach einem der vorhergehenden Ansprüche, mit den Schritten:
Einführen des Federelements in die Aussparung; und
Verrasten des Federelements an der Hinterschneidung.

## Claims

1. A brush seal for a turbomachine comprising a carrier (1) that has a recess (2) in which a spring element (3) is axially braced that immobilizes a brush element (4), the spring element being axially latched against an undercut (2.1) in the recess, **characterized in that,** the spring element has a first leg (3.1), adjacent thereto a second leg (3.2) and adjacent to this a third leg (3.3), the brush element being immobilized, in particular clamped, between the first and second legs, and/or the spring element having a fourth leg (3.4) adjacent to the third leg that braces against the undercut.

2. The brush seal according to the preceding claim, **characterized in that** the spring element is radially immobilized in the recess by frictional engagement or positive-locking.

3. The brush seal according to any of the preceding claims, **characterized in that** the recess has an insertion opening (2.2) for insertion of the subsequently radially expanding spring element.

4. The brush seal according to the preceding claim, **characterized in that** the first leg braces axially against a shoulder (2.5) of the recess.

5. The brush seal according to either of the two preceding claims, **characterized in that** the spring element braces radially against a transition area between the first and second legs and/or against a transition area between the third and fourth legs in the recess.

6. The brush seal according to any of the preceding claims, **characterized in that** the annular brush and/or spring element is designed in one part or in several parts.

7. The brush seal according to any of the preceding claims, **characterized in that** the, in particular metallic, spring element is coated, in particular galvanically.

8. The brush seal according to any of the preceding claims, **characterized in that** the carrier is made of a titanium-aluminum alloy.

9. A turbomachine comprising a rotor, a housing and a brush seal according to any of the preceding claims having a fixed-housing carrier that has the recess, the brush element contacting the rotor.

10. The turbomachine according to claim 9, wherein the turbomachine is a gas turbine.

11. A method for assembling a brush seal according to any of the preceding claims, comprising the steps:
Insertion of the spring element in the recess; and latching of the spring element against the undercut.

## Revendications

1. Joint à brosse pour une turbomachine, comportant un support (1), qui présente une cavité (2) dans laquelle est tendu axialement un élément à ressort (3), qui spécifie une élément de brosse (4),
dans lequel l'élément à ressort est enclenché axialement dans la cavité sur une contredépouille (2.1),
**caractérisé en ce que** l'élément à ressort présente une première branche (3.1), une deuxième branche (3.2) voisine de celle-ci et une troisième branche (3.3) voisine de celle-ci, dans lequel l'élément de brosse est spécifié, en particulier calé, entre la première et la deuxième branche et/ou l'élément à ressort présente une quatrième branche (3.4) voisine de la troisième branche, qui s'appuie sur la contredépouille.

2. Joint à brosse selon la revendication précédente, **caractérisé en ce que** l'élément à ressort est spécifié radialement dans la cavité par friction et/ou adaptation de formes.

3. Joint à brosse selon l'une quelconque des revendications précédentes, **caractérisé en ce que** la cavité présente une ouverture d'entrée (2.2) pour insérer l'élément à ressort qui est expansé radialement ensuite.

4. Joint à brosse selon la revendication précédente, **caractérisé en ce que** la première branche s'appuie axialement sur un épaulement (2.5) de la cavité.

5. Joint à brosse selon l'une quelconque des deux revendications précédentes, **caractérisé en ce que** l'élément à ressort s'appuie radialement dans la cavité par une zone de transition entre la première et la deuxième branche et/ou par une zone de transition entre la troisième et la quatrième branche.

6. Joint à brosse selon l'une quelconque des revendications précédentes, **caractérisé en ce que** l'élément de brosse et/ou l'élément à ressort annulaires est ou sont formés en une ou plusieurs parties.

7. Joint à brosse selon l'une quelconque des revendications précédentes, **caractérisé en ce que** l'élément à ressort en particulier métallique est revêtu en particulier par voie galvanique.

8. Joint à brosse selon l'une quelconque des revendications précédentes, **caractérisé en ce que** le support est formé d'un alliage de titane et d'aluminium.

9. Turbomachine comprenant un rotor, un boîtier et un joint à brosse selon l'une quelconque des revendications précédentes, avec un support fixé au boîtier, qui présente une cavité, dans laquelle l'élément de brosse vient en contact avec le rotor.

10. Turbomachine selon la revendication 9, dans laquelle la turbomachine est une turbine à gaz.

11. Procédé de montage d'un joint à brosse selon l'une quelconque des revendications précédentes, avec les étapes consistant à :
introduire l'élément à ressort dans la cavité ; et
enclencher l'élément à ressort sur la contredépouille.
